# EUROPEAN PATENT APPLICATION

(11) **EP 4 765 927 A1**
(43) Date of publication of application: **24.06.2026**
(21) Application number: 24855354.7
(22) Date of filing: 11.05.2024
(51) Int. Cl.: H04W 24/02

(54) **COMMUNICATION METHODS AND APPARATUSES, AND STORAGE MEDIUM**

(30) Priority: 18.08.2023 CN 202311052365
(71) Applicant: ZTE Corporation, Shenzhen, Guangdong 518057 (CN)
(72) Inventor: HU, Youjun, Shenzhen, Guangdong 518057 (CN); DAI, Bo, Shenzhen, Guangdong 518057 (CN); CHEN, Mengzhu, Shenzhen, Guangdong 518057 (CN); GUO, Qiujin, Shenzhen, Guangdong 518057 (CN); YANG, Weiwei, Shenzhen, Guangdong 518057 (CN); MA, Xiaoying, Shenzhen, Guangdong 518057 (CN); LIU, Kun, Shenzhen, Guangdong 518057 (CN); XU, Jun, Shenzhen, Guangdong 518057 (CN); MA, Xuan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/092703
(87) International publication number: WO 2025/039624

(57) **Abstract**

Provided in the present disclosure are communication methods and apparatuses, and a storage medium. A communication method comprises: on the basis of at least one condition, performing an operation, the operation comprising at least one of the following: measurement, monitoring, blind detection, synchronization, reception, wake-up, activation, deactivation, filtering, and configuration determination.

## Description

This application claims priority of Chinese Patent Application No. 202311052365.4, filed on August 18, 2023, which is incorporated into this application by reference in its entirety.

### TECHNICAL FIELD

The present disclosure relates to the field of communication technologies, and in particular, to a communication method, a device, and a storage medium.

### BACKGROUND

For the 5th generation (5G) communication system, in addition to latency, reliability and availability, energy efficiency of terminal devices is also crucial. Currently, by introducing low-power signals, such as low-power wake-up signals (LP-WUSs), power consumption of terminals is reduced, usage time of terminals is extended, and user experience is improved.

### SUMMARY

In an aspect, a communication method is provided. The communication method includes: performing an operation based on at least one condition. The operation includes at least one of: measurement, monitoring, blind detection, synchronization, reception, wake-up, activation, deactivation, filtering, and configuration determination.

In another aspect, a communication method is provided. The communication method includes: sending a configuration to a first communication node. The configuration includes at least one of: a configuration of a low-power signal, a condition, a threshold requirement, and a higher layer parameter.

In yet another aspect, a communication device is provided. The communication device includes a processing module. The processing module is configured to perform an operation based on at least one condition. The operation includes at least one of: measurement, monitoring, blind detection, synchronization, reception, wake-up, activation, deactivation, filtering, and configuration determination.

In yet another aspect, a communication device is provided. The communication device includes a communication module. The communication module is configured to send a configuration to a first communication node. The configuration includes at least one of: a configuration of a low-power signal, a condition, a threshold requirement, and a higher layer parameter.

In yet another aspect, a communication device is provided. The communication device includes a processor and a memory. The memory stores instructions executable by the processor. The processor is configured to, upon executing the instructions, enable the communication device to perform the method as provided in the aspects described above.

In yet another aspect, a computer readable storage medium storing computer instructions is provided. Upon the computer instructions are run on a computer, the computer is enabled to perform the method as provided in the aspects described above.

In yet another aspect, a computer program product including computer instructions is provided. Upon the computer instructions are run on a computer, the computer is enabled to perform the method as provided in the aspects described above.

### BRIEF DESCRIPTION OF THE DRAWINGS

The accompanying drawings are used for a further understanding of the technical solutions of the present disclosure, constitute a part of the specification, are used to explain the technical solutions of the present disclosure together with the embodiments of the present disclosure, and do not limit the technical solutions of the present disclosure.
FIG. 1 is a schematic diagram showing an architecture of a communication system, in accordance with embodiments of the present disclosure;
FIG. 2 is a flow chart of a communication method, in accordance with embodiments of the present disclosure;
FIG. 3 is a schematic diagram of a time window, in accordance with embodiments of the present disclosure;
FIG. 4 is a flow chart of another communication method, in accordance with embodiments of the present disclosure;
FIG. 5 is a schematic diagram showing a structure of a communication device, in accordance with embodiments of the present disclosure;
FIG. 6 is a schematic diagram showing a structure of another communication device, in accordance with embodiments of the present disclosure; and
FIG. 7 is a schematic diagram showing a hardware structure of a communication device, in accordance with embodiments of the present disclosure.

### DETAILED DESCRIPTION

The technical solutions in the present disclosure will be described clearly and completely below with reference to the accompanying drawings in the present disclosure. However, the described embodiments are merely some but not all of embodiments of the present disclosure. All other embodiments obtained based on the embodiments of the present disclosure by a person of ordinary skill in the art without paying any creative effort will be included in the protection scope of the present disclosure.

It will be noted that, in the present disclosure, the term such as "exemplary/exemplarily" or "for example" is used to represent an example, illustration, or explanation. Any embodiment or design solution described with "exemplary/exemplarily" or "for example" in the present disclosure is not necessarily to be construed as preferred or advantageous over other embodiments or design solutions. Rather, the use of the term such as "exemplary/exemplarily" or "for example" is intended to present relevant concepts in a specific manner.

Hereinafter, the terms "first" and "second" are used for descriptive purposes only, and are not to be construed as indicating or implying a relative importance or implicitly indicating the number of indicated technical features. Thus, a feature defined with "first" or "second" may explicitly or implicitly include one or more of the features.

In the description of the present disclosure, unless otherwise specified, the symbol "/" means "or", for example, "A/B" may mean A or B. Herein, "and/or" is merely an associated relationship for describing associated objects, which means that there may be three relationships. For example, A and/or B may mean: only A, only B, and A and B at the same time. In addition, the term such as "at least one" means one or more, and the term such as "a/the plurality of" means two or more.

As described in the background, relevant mechanisms for low-power signals are not yet fully developed at present. For example, as for problems such as how to perform radio resource management (RRM) measurement based on the low-power signals and in what conditions relaxed RRM measurement may be performed, corresponding technical solutions are not provided in the related art. On this basis, a communication method, a device, and a storage medium are provided in the embodiments of the present disclosure, so as to improve the relevant mechanisms for low-power signals.

The communication method provided in the embodiments of the present disclosure may be applied to systems in a variety of communication standards. For example, the communication method provided in the embodiments of the present disclosure may be applicable to systems, including but not limited to, a long term evolution (LTE) system, a variety of versions based on LTE advanced, a fifth generation (5G) system, or other communication systems. In addition, the communication method provided in the embodiments of the present disclosure may further be applicable to future-oriented communication systems (e.g., a 6G communication system), etc.

A network architecture of a mobile communication network (including but not limited to 3G, 4G, 5G and future mobile communication networks) in the embodiments of the present disclosure may include at least one first communication node and at least one second communication node. It will be understood that, in this example, in a downlink, the first communication node may be a network-side device (e.g., including but not limited to a base station), and the second communication node may be a terminal-side device (e.g., including but not limited to a terminal). Of course, in an uplink, the first communication node may also be a terminal-side device, and the second communication node may also be a network-side device. In a case where two communication nodes are in a device-to-device communication, both the first communication node and the second communication node may be base stations or terminals. The first communication node and the second communication node may be referred to as a first node and a second node for short, respectively.

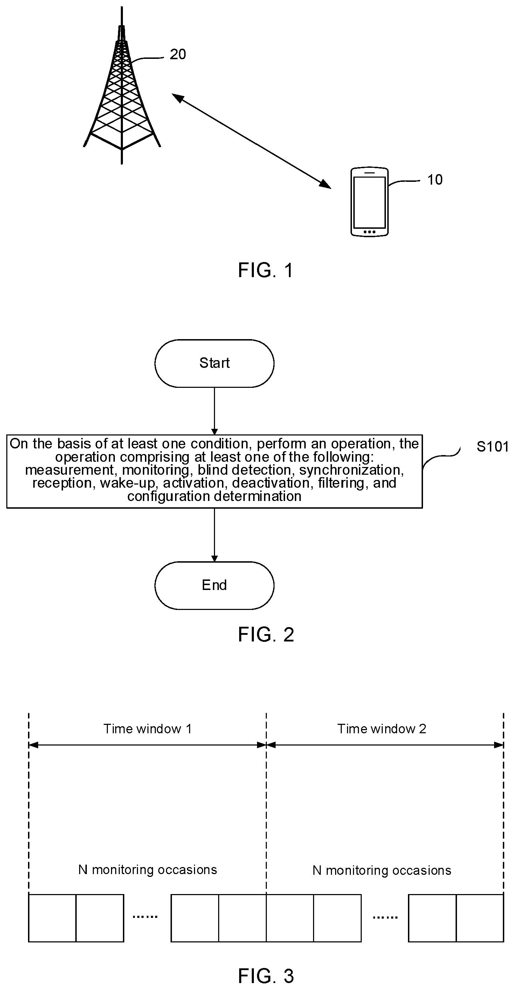

For example, in an example where the first communication node is a terminal and the second communication node is a base station, as shown in FIG. 1, a communication system according to the embodiments of the present disclosure is provided. The communication system includes a terminal 10 and a base station 20. There may be one or more terminals 10 and base stations 20, and the number of the terminals 10 and the number of the base stations 20 are not limited herein.

In some embodiments, the base station 20 provides a wireless access service to the terminal 10. A base station 20 provides at least one service coverage area (also referred to as a cell). A terminal 10 entering this area may communicate with the base station 20 by a wireless signal, to receive a wireless access service provided by the base station 20.

In some embodiments, to save power consumption, the terminal 10 may have a main radio and a low-power radio. In a case where the terminal is in a non-operating state, the main radio may be in a closed state or a sleep state, while the low-power radio may monitor low-power signals (e.g., LP-WUSs). When the low-power radio receives the LP-WUS used to instruct the terminal to wake up, the terminal will switch the main radio to an operating state, so as to send or receive data.

In some embodiments, the base station may be a base station or an evolutional node B (eNB or eNodeB) in long term evolution (LTE), long term evolution advanced (LTE-A), a base station device in a 5G network, or a base station in a future communication system. The base station may include a variety of network-side devices such as a variety of macro base stations, micro base stations, home base stations, wireless remote devices, reconfigurable intelligent surfaces (RISs), routers, relays, transmission and reception points (TRPs), and wireless fidelity (WIFI) devices.

In some embodiments, the terminal may be a device with wireless transceiving functions. The terminal may be a mobile phone, a pad, a computer with a wireless transceiving function, a virtual reality (VR) terminal, an augmented reality (AR) terminal, a wireless terminal in an industrial control system, a wireless terminal in a self driving system, a wireless terminal in a remote medical system, a wireless terminal in a smart grid, a wireless terminal in a transportation safety system, a wireless terminal in a smart city, a wireless terminal in a smart home, etc. The embodiments of the present disclosure do not limit the application scenarios. The terminal sometimes may also be referred to as a user, user equipment (UE), an access terminal, a UE unit, a UE station, a mobile station, a mobile platform, a remote station, a remote terminal, a mobile device, a UE terminal, a wireless communication device, a UE agent, a UE device, etc, and the embodiments of the present disclosure are not limited thereto.

The embodiments of the present disclosure do not limit the application scenarios. The system architecture and service scenarios described in the embodiments of the present disclosure are intended to more clearly explain the technical solutions in the embodiments of the present disclosure and do not constitute a limitation on the technical solutions provided in the embodiments of the present disclosure. Those skilled in the art will know that with the evolution of network architectures and the emergence of new service scenarios, the technical solutions provided in the embodiments of the present disclosure are also applicable to similar technical problems.

As shown in FIG. 2, a communication method is provided in the embodiments of the present disclosure, and the communication method is applied to the first communication node. The communication method includes the following: in S101, an operation is performed based on at least one condition.

The operation includes at least one of: measurement, monitoring, blind detection, synchronization, reception, wake-up, activation, deactivation, filtering, and configuration determination. The monitoring may also be described as detection, which is not limited thereto.

In some embodiments, the operation may be an operation based on a low-power signal. The low-power signal includes at least one of: a low-power synchronization signal (LP-SS), a low-power wake-up signal (LP-WUS), a sequence, a primary synchronization signal (PSS), a secondary synchronization signal (SSS), a demodulation reference signal (DMRS), a synchronization signal block (SSB), and a channel state information-reference signal (CSI-RS). The low-power signal may further include other reference signals, which are not listed one by one herein.

The LP-SS may replace the SSB and assume the role of the SSB in processes such as cell synchronization and RRM. Moreover, the first communication node may use the low-power radio to receive the LP-SS without turning on the main radio for reception, so as to reduce power consumption of the first communication node. In some embodiments, the LP-SS may be periodic.

The LP-WUS is configured to wake up the first communication node to perform physical downlink control channel (PDCCH) detection or to initiate access.

In some embodiments, the low-power signal is generated based on on-off keying (OOK) modulation, frequency-shift keying (FSK) modulation, or orthogonal frequency division multiplexing (OFDM) modulation.

In some embodiments, a configuration of the LP-SS includes at least one of: the number of beams of the LP-SS, the number of sequences of the LP-SS, the number of bits of information carried by the LP-SS, information of the LP-SS at least including at least one of a system information change notification indication, a disaster warning indication, a wake-up indication, beam information, SSB index information, and cell information, the number of physical resource blocks (PRBs) occupied by the LP-SS, the number of OFDM symbols of the LP-SS, the number of slots in a set of the LP-SS, a period length of the LP-SS, a time domain offset of the LP-SS, and a correspondence between the sequence detection or a sequence set of the LP-SS and the beam information.

The configuration of the LP-SS is merely an example and does not constitute a limitation on the LP-SS.

For example, the number of beams of the LP-SS is 1, 4 or 8.

For example, the number of sequences of the LP-SS is 2, 4, 8, or 16.

For example, the number of bits of information carried by the LP-SS is 1, 2, 3, or 4.

For example, for a subcarrier spacing of 30 kHz, the number of physical resource blocks (PRBs) occupied by the LP-SS is 6, 7, 8, 10, 11, 12, or 13; for a subcarrier spacing of 15 kHz, the number of PRBs occupied by the LP-SS is 23, 24, 25, 26, 27, or 28.

For example, the number of OFDM symbols of the LP-SS is 1, 4, 7 or 14.

For example, the number of slots in a set of the LP-SS is 1, 2 or 4.

For example, the period length of the LP-SS is 160 ms, 320 ms, 640 ms, 1280 ms, or 2560 ms.

For example, the time domain offset of the LP-SS is 0 ms, 5 ms, 10 ms, 20 ms, 40 ms, or 80 ms.

The disaster warning indication may be warning indications from the earthquake and tsunami warning system (ETWS) or the commercial mobile alert system (CMAS).

As an example, the system information change notification indication, disaster warning indication, and wake-up indication may be implemented with 1 bit.

It will be understood that, since there is a correspondence between the sequence or sequence set of the LP-SS and the beam information, that is, different sequences or sequence sets of the LP-SS indicate different beam information, the beam information of the beam carrying the LP-SS may be determined by identifying the sequence or sequence set used by the LP-SS.

In some embodiments, a configuration of the LP-WUS includes at least one of: a system message change indication, a disaster warning indication, beam information, grouping information of the first communication node, first communication node identification information, a reserved bit, a function indication, cell information, period information, information of a time window or pattern, monitoring occasion information, information of the number of transmissions, and the number of payload bits.

The configuration of the LP-WUS is merely an example and does not constitute a limitation on the LP-WUS.

In the embodiments of the present disclosure, the beam information includes beam index indication information and/or association information between the beam and other signals or channels. As an example, the number of bits of the beam information may be a constant value, such as 1, 2, or 3 bits. As another example, different frequency points, carriers, or frequency bands have different beam information. As another example, beam information of different frequency points, carriers, or frequency bands may have different numbers of bits.

The grouping information includes at least one of: index information, identification information, and radio network temporary identifier (RNTI) information of a group where the first communication node is located.

The first communication node identification information includes at least one of: index information, identification information, and radio network temporary identifier (RNTI) information of the first communication node.

The cell information includes identification information of a serving cell or identification information of a neighbor cell.

The function indication is used to determine to perform at least one of the following operations: monitoring of a paging occasion, reception of a system information block, transmission of a physical random access channel (PRACH), and monitoring of a physical downlink control channel (PDCCH). As an example, the function indication may be 1, 2, or 3 bits.

The information of the time window or pattern is used to determine a monitoring occasion (or a time domain position) for monitoring the LP-WUS. The monitoring occasions (or time domain positions) determined by the information of the time window or pattern may be continuous or discontinuous, which is not limited thereto.

The information of the number of transmissions is used to determine the maximum number of transmissions or the number of transmissions for the LP-WUS within a time window, a pattern, a monitoring occasion, or a period.

It will be understood that there is at least one monitoring occasion within a time window, pattern, or period.

As an example, the number of payload bits of the LP-WUS may be set to less than or equal to 32, 24, or 28.

In some embodiments, the LP-SS and the LP-WUS satisfy at least one of the following: a frequency position of an LP-SS resource does not overlap with a frequency position of an LP-WUS resource; a center frequency position or frequency position of an LP-SS resource is located in the middle of two LP-WUS resources; and a time domain position of an LP-SS resource overlaps or does not overlap with a time domain position of an LP-WUS resource.

The implementation of the S101 will be described below for different operations.

### I. Measurement

The measurement may refer to RRM measurement. As an example, the RRM measurement may be achieved based on a low-power signal. For example, the RRM measurement may be achieved by measuring the LP-SS.

In the embodiments of the present disclosure, the measurement may be classified into a first type of measurement and a second type of measurement based on a period length. A period of the first type of measurement may be longer than a period of the second type of measurement.

As an example, the first type of measurement includes relaxed measurement. The second type of measurement includes normal measurement and dense measurement. The normal measurement refers to a scenario where a measurement period is N discontinuous reception (DRX) cycles, N milliseconds, or N time units. The dense measurement refers to a scenario where a greater number of measurements are performed within the same time period.

As an example, the first type of measurement may not require a period to be configured. The first type of measurement is performed in response to the condition being satisfied or not satisfied. The second type of measurement is performed in response to the condition not being satisfied or being satisfied. The condition includes a first condition or a second condition.

It will be understood that the first communication node performing the first type of measurement may perform fewer signal measurements than the first communication node performing the second type of measurement, which is conducive to reducing power consumption.

In the embodiments of the present disclosure, the measurement may be classified by measurement objects into first measurement and second measurement. The first measurement may include serving cell measurement. The second measurement may include at least one of: intra-frequency cell measurement, new radio (NR) inter-frequency cell measurement, and radio access technology (RAT) inter-frequency cell measurement.

In some embodiments, the S101 may be implemented as: performing the first type of measurement based on the first condition.

The first condition includes at least one of the following: the first communication node has low mobility, the first communication node is in a stationary state, the first communication node is not located at a cell edge, the first communication node is configured with a higher layer parameter, the first communication node has performed the first measurement and/or the second measurement at least a preset number of times, the first communication node has performed the first measurement and/or the second measurement within a period of time, and a measurement parameter satisfies a first threshold requirement.

It will be understood that the low mobility refers to a scenario where a movement speed of the first communication node is relatively low. In a case where the first communication node is in the stationary state or has low mobility, the channel environment around the first communication node changes relatively slowly. Therefore, the first communication node may adopt the first type of measurement, to reduce the measurement frequency and the power consumption of the first communication node.

It will be understood that the channel environment of the first communication node that is not located at the cell edge is relatively uncomplicated. Therefore, the first communication node may adopt the first type of measurement, to reduce the measurement frequency and the power consumption of the first communication node.

It will be understood that, after the first communication node accesses a new cell, the first communication node has performed the first measurement and/or the second measurement, or the first communication node has performed the first measurement and/or the second measurement within a period of time. It may be understood that the first communication node has obtained relevant channel information (e.g., a measurement parameter of a serving cell, a measurement parameter of a neighbor cell). Therefore, the first communication node may adopt the first type of measurement, to reduce the measurement frequency and the power consumption of the first communication node.

That is to say, in the embodiments of the present disclosure, by reasonably setting the first condition, the first communication node is enabled to perform the first type of measurement in a suitable scenario, thereby reducing the power consumption of the first communication node.

As an example, the first communication node having low mobility satisfies the following requirement: a difference between SrxlevRef and Srxlev is less than X1 (i.e., (SrxlevRef - Srxlev) < X1). The SrxlevRef denotes a reference cell selection reception level value of the serving cell. The Srxlev denotes a current cell selection reception level value of the serving cell. X1 is a first threshold, and X1 is less than or greater than S_{SearchDeltaP}. S_{SearchDeltaP} denotes a variation threshold of the cell selection reception level value.

As an example, the first communication node not located at the cell edge satisfies the following requirements: Srxlev is greater than X2 (i.e., Srxlev > X2), and Squal is greater than X3 (i.e., Squal > X3). The Srxlev denotes a cell selection reception level value of a serving cell. The Squal denotes a cell selection quality value of the serving cell. X2 is a second threshold, and X2 may be configured by the base station or greater than S_{SearchThresholdP}. X3 is a third threshold, and X3 may be configured by the base station or greater than S_{SearchThresholdQ}. At least one of Srxlev and Squal is obtained based on a low-power signal. For example, S_{SearchThresholdP} is a threshold configured for Srxlev, S_{SearchThresholdQ} is a threshold configured for Squal. Alternatively, S_{SearchThresholdP} and S_{SearchThresholdQ} are defined or configured thresholds.

As an example, the higher layer parameter includes at least one of a first higher layer parameter, a second higher layer parameter, a third higher layer parameter, and a fourth higher layer parameter. The first higher layer parameter is used to determine whether the first communication node has low mobility. The second higher layer parameter is used to determine whether the first communication node is located at the cell edge. The third higher layer parameter is used to determine whether the first communication node is in the stationary state. The fourth higher layer parameter is used to determine whether the first communication node in the stationary state is located at the cell edge.

The higher layer parameters may have other names. For example, the first higher layer parameter may be referred to as lowMobilityEvaluation, the second higher layer parameter may be referred to as cellEdgeEvaluation, the third higher layer parameter may be referred to as stationaryMobilityEvaluation, and the fourth higher layer parameter may be referred to as cellEdgeEvaluationWhileStationary, which is not limited thereto.

The base station may configure a corresponding higher layer parameter based on a type of the first communication node. The third higher layer parameter and fourth higher layer parameter may be configured for a specific type of the first communication node, such as a reduced capability (RedCap) UE.

As an example, the measurement parameter may include: a cell selection reception level value (Srxlev), a cell selection quality value (Squal), a reference signal receiving power (RSRP), a reference signal receiving quality (RSRQ), a reference signal strength indication (RSSI), and a signal to interference plus noise ratio (SINR).

As an example, the measurement parameters may be obtained based on a low-power signal. Alternatively, the measurement parameters may also be obtained based on a non-low-power signal.

As an example, that the measurement parameter satisfies a threshold requirement may be understood as the following: the measurement parameter is greater than a threshold, or the measurement parameter is less than a threshold, or the measurement parameter is equal to a threshold, or a difference between the measurement parameter and a reference value is greater than a threshold, or the difference between the measurement parameter and the reference value is less than a threshold, or the difference between the measurement parameter and the reference value is equal to a threshold, which is not limited thereto.

As an example, the measurement parameter satisfies the first threshold requirement, including the following: Srxlev is greater than X4 (i.e., Srxlev > X4), where X4 is a fourth threshold and configured or predefined by the base station; Squal is greater than X5 (i.e., Squal > X5), where X5 is a fifth threshold and configured or predefined by the base station; a first measurement parameter Q1 is greater than a sixth threshold, where Q1 is determined based on the RSRP, for example, Q1 is the RSRP; and a second measurement parameter Q2 is greater than a seventh threshold, where Q2 is determined based on the RSRQ, for example, Q2 is RSRP.

As an example, the measurement parameter satisfies the first threshold requirement, including the following: a difference between a third measurement parameter based on the low-power signal and a first reference value is less than an eighth threshold; and a difference between a fourth measurement parameter based on the low-power signal and a second reference value is greater than a ninth threshold.

The reference values (i.e., the first reference value and the second reference value) may be the Srxlev and Squal of the serving cell, or Q1 and Q2 based on the SSB/PSS/SSS/DMRS of the measured cell.

As an example, there may be a plurality of measurement parameters and a plurality of threshold requirements, which is not limited thereto. For example, the measurement parameter includes a parameter 1 and a parameter 2, and the threshold requirement includes that the parameter 1 is greater than a threshold 1 and the parameter 2 is less than a threshold 2.

In some embodiments, the fulfillment of the first condition may be achieved in a plurality of ways.

In an example 1, the first condition may include any one of the following: the first communication node has low mobility, the first communication node is in a stationary state, the first communication node is not at a cell edge, and the first communication node is in a stationary state and not located at a cell edge.

In an example 2, the first condition may include at least one of the following: the measurement parameter satisfies the first threshold requirement, the measurement parameter is determined within a target time period configured or predefined by the base station, a value of the measurement parameter is an average value within the target time period, and the measurement parameter satisfies the first threshold requirement for at least M times within the target time period.

The measurement parameter satisfies the first threshold requirement, including the following: Srxlev is greater than X4 (i.e., Srxlev > X4), where X4 is a fourth threshold and configured or predefined by the base station; Squal is greater than X5 (i.e., Squal > X5), where X5 is a fifth threshold and configured or predefined by the base station; a first measurement parameter Q1 is greater than a sixth threshold, where Q1 is determined based on the RSRP, for example, Q1 is the RSRP; and a second measurement parameter Q2 is greater than a seventh threshold, where Q2 is determined based on the RSRQ, for example, Q2 is RSRP.

In some embodiments, different thresholds may be set for first communication nodes with different configurations, such as first communication nodes with different payload sizes.

In some embodiments, a threshold for a specific first communication node may be different from a threshold for the group where the first communication node is located.

In some embodiments, first communication nodes in different modes may use different signaling to configure the first condition described above. Alternatively, first communication nodes in different modes may use the same signaling to configure the first condition described above, but the first communication nodes in different modes may interpret the signaling used to configure the first condition based on their own modes, and the first communication nodes in different modes may interpret the signaling differently.

In some embodiments, in a case where the first communication node has different conditions for entering the relaxed measurement (i.e., the first type of measurement), the first communication node may perform different fallback mechanisms based on the low-power signal. That is to say, in response to the first communication node performing the first type of measurement, the first communication node may determine whether to continue performing the first type of measurement based on a measurement result and/or measurement report (MR) of the low-power signal.

For example, in a case where the first communication node is in a stationary state and not located at the cell edge, and performs the relaxed measurements for the serving cell and neighbor cell, in response to the condition based on the low-power signal being not satisfied, the first communication node performs the normal measurement for the serving cell and the relaxed measurement for the neighbor cell. That is to say, the relaxed measurement for the serving cell falls back to the normal measurement.

For another example, in a case where the first communication node is in a stationary state and performs the relaxed measurements for the serving cell and neighbor cell, in response to the condition based on the low-power signal being not satisfied, the first communication node performs the normal measurement for the serving cell and the relaxed measurement for the neighbor cell.

For another example, in a case where the first communication node has low mobility, is not located at the cell edge, and performs the relaxed measurements for the serving cell and neighbor cell, in response to the condition based on the low-power signal being not satisfied, the first communication node performs the normal measurements for the serving cell and neighbor cell. That is to say, the relaxed measurements for the serving cell and neighbor cell both fall back to the normal measurements.

For another example, in a case where the first communication node has low mobility and performs the relaxed measurements for the serving cell and neighbor cell, in response to the condition based on the low-power signal being not satisfied, the first communication node performs the normal measurements for the serving cell and neighbor cell.

It is determined, based on the measurement result of the low-power signal, whether the condition based on the low-power signal is satisfied. As an example, the condition based on the low-power signal includes at least one of the following: a measurement parameter based on the low-power signal satisfies a third threshold requirement, a difference of the measurement parameter based on the low-power signal satisfies a fourth threshold requirement, the measurement parameter satisfies the third threshold requirement for at least N times within a preset or configured time period, and the difference of the measurement parameter satisfies the fourth threshold requirement for at least N times within the preset or configured time period. N is a positive integer.

As an example, the difference of the measurement parameter may be a difference between the measurement parameter and a reference value.

In some embodiments, the step S101 may be implemented as: performing the second type of measurement based on a second condition, or not performing the first type of measurement based on the second condition.

The second condition includes at least one of the following: a cell selection criterion S is satisfied and a measurement parameter of a serving cell does not satisfy a second threshold requirement; the first communication node does not have low mobility or is in a moving state; the first communication node is not in a stationary state; the first communication node is located at a cell edge or does not satisfy a condition of not being at the cell edge; and the condition based on the low power signal is not satisfied.

The cell selection criterion S includes the following: Srxlev is greater than 0 (i.e., Srxlev > 0), and Squal is greater than 0 (i.e., Squal > 0).

As an example, the performing the second type of measurement includes any one of: performing the first measurement based on a first period; performing the first measurement based on the first period and performing the second measurement based on a second period, where the first period is less than or equal to the second period; performing the first measurement and the second measurement based on the first period; performing the first measurement and/or the second measurement once at least every M discontinuous reception (DRX) cycles, where M is a positive integer; and performing the first measurement and/or the second measurement at least twice at least every M DRX cycles.

As an example, M may be less than a product of M1 and N1 (i.e., M1 * N1). M1 and N1 are both constants. N1 is a scaling factor, and M1 is determined based on an SSB measurement timing configuration (SMTC).

As an example, for the second threshold requirement, reference may be made to the first threshold requirement, which is not limited thereto.

It will be understood that the first measurement and/or the second measurement is performed with a relatively short period (i.e., the first period), which may help the first communication node to in timely acquire information about the surrounding channel environment.

The measurement parameter based on the low-power signal is described below.

### (1) RSSI

The RSSI may be a linear average power of a received signal based on a measurement time T and a frequency domain resource (N RBs).

As an example, the RSSI may be a linear average power of the received signal over a specific OFDM symbol. For example, the RSSI may be a linear average power of the received LP-SS over an OFDM symbol and N RBs.

As another example, the RSSI is a linear average power of the received signal over an OOK symbol or resource carrying the LP-SS.

As yet another example, the RSSI is a linear average power of the received signal over an OOK symbol or resource carrying the LP-SS and indicating 1. For example, a power of an OOK symbol (N RBs) with a value of 1 (i.e., OOK symbol = 1) is a linear average power of a plurality of OOK symbols with a value of 1 (i.e., OOK symbol = 1).

As yet another example, the RSSI is a linear average power of the received signal over an OOK symbol or resource carrying the LP-SS and indicating 0. For example, a power of an OOK symbol (N RBs) with a value of 0 (i.e., OOK symbol = 0) is a linear average power of a plurality of OOK symbols with a value of 0 (i.e., OOK symbol = 0). The RSSI may be described as non-signal power, including interference and thermal noise from co-channel serving and non-serving cells as well as adjacent channels.

As yet another example, the RSSI is determined based on a first coefficient and the linear average power of the received signal over the measurement time and frequency domain resource. For example, the RSSI may be equal to a product of the first coefficient and the linear average power.

As yet another example, the RSSI is determined based on the first coefficient and the linear average power of the received signal over the OOK symbol or resource carrying the LP-SS.

The first coefficient is determined based on at least one of: the number of OOK symbols or resources carried by an OFDM symbol, a coding rate, a type of an OOK symbol or resource, a bandwidth of a low-power signal, a base station configuration, and a predefined value. For example, the coding rate may be the Manchester coding rate.

For ease of description, in the following, the linear average power of the received signal over the OOK symbol or resource carrying the LP-SS and indicating 1 is referred to as a first RSSI, and the linear average power of the received signal over the OOK symbol or resource carrying the LP-SS and indicating 0 is referred to as a second RSSI.

As an example, the OOK symbol indicating 0 may also be described as an OOK symbol indicating off or closed; the OOK symbol indicating 1 may also be described as an OOK symbol indicating on or open, which is not limited thereto.

### (2) RSRP

As an example, the RSRP is a linear average power of the received signal over a specific OFDM symbol, OOK symbol, or resource.

As another example, the RSRP is a linear average power of the received signal over an OOK symbol or resource carrying the LP-SS and indicating 1.

As yet another example, the RSRP is determined based on the linear average power of the received signal over the OOK symbol or resource carrying the LP-SS and indicating 1, and a linear average power of the received signal over an OOK symbol or resource carrying the LP-SS and indicating 0. For example, the RSRP is equal to a difference between the first RSSI and the second RSSI.

As yet another example, the RSRP is determined based on a second coefficient and the linear average power of the received signal over the specific OFDM symbol, OOK symbol, or resource. For example, the RSRP is equal to a product of C and RSRP1 (i.e., C * RSRP1). C denotes the second coefficient, and RSRP1 denotes the linear average power of the received signal over the specific OFDM symbol, OOK symbol, or resource.

As yet another example, the RSRP is determined based on the second coefficient and the linear average power of the received signal over the OOK symbol or resource carrying the LP-SS and indicating 1. For example, the RSRP is equal to a product of C and RSRP2 (i.e., C * RSRP2). RSRP2 denotes the linear average power of the received signal over the OOK symbol or resource carrying the LP-SS and indicating 1.

As yet another example, the RSRP is determined based on the second coefficient, the linear average power of the received signal over the OOK symbol or resource carrying the LP-SS and indicating 1, and the linear average power of the received signal over the OOK symbol or resource carrying the LP-SS and indicating 0. For example, the RSRP is equal to a product of C and RSRP3 (i.e., C * RSRP3), and RSRP3 is equal to a difference between the first RSSI and the second RRSI.

The second coefficient is determined based on at least one of: the number of OOK symbols or resources carried by an OFDM symbol, a coding rate, a type of an OOK symbol or resource, a bandwidth of a low-power signal, a base station configuration, and a predefined value. For example, the coding rate may be the Manchester coding rate.

### (3) RSRQ

In the embodiments of the present disclosure, the RSRQ may be determined based on at least one of: a third coefficient, an RSRP based on a specific OOK symbol or resource, an RSRP based on a specific OFDM symbol, an RSSI based on a specific OOK symbol or resource, and an RSSI based on a specific OFDM symbol.

The third coefficient may be configured by the base station or predefined.

As an example, the RSRQ may be equal to a quotient of a product of C and SS-RSRP and NR carrier RSSI (i.e., C × SS-RSRP / NR carrier RSSI). C denotes the third coefficient, SS-RSRP may be an RSRP based on the specific OOK symbol or resource, and NR carrier RSSI may be an RSSI based on the specific OOK symbol or resource.

As another example, the RSRQ may be equal to a quotient of the SS-RSRP and the NR carrier RSSI (i.e., SS-RSRP / NR carrier RSSI).

As yet another example, the RSRQ may be equal to a quotient of a difference between the first RSSI and the second RSSI and the first RSSI (i.e., (first RSSI - second RSSI) / first RSSI).

### (4) SINR

As an example, the SINR is determined based on the linear average power of the received signal over the OOK symbol or resource carrying the LP-SS and indicating 1, and the linear average power of the received signal over the OOK symbol or resource carrying the LP-SS and indicating 0. For example, the SINR is equal to a ratio between the linear average power of the received signal over the OOK symbol or resource carrying the LP-SS and indicating 1 and the linear average power of the received signal over the OOK symbol or resource carrying the LP-SS and indicating 0.

As another example, the SINR is determined based on the linear average power of the received signal over the OOK symbol or resource carrying the LP-SS and indicating 1, and a power of noise and interference. For example, the SINR is equal to a ratio between the linear average power of the received signal over the OOK symbol or resource carrying the LP-SS and indicating 1, and the power of noise and interference.

### II. Activation

In some embodiments, the step S101 may be implemented as: activating monitoring of the low-power signal based on a third condition.

The third condition includes at least one of the following: the third condition is determined based on first signaling, the first condition is satisfied, and a measurement parameter based on an LP-SS satisfies a fifth threshold requirement in response to the monitored low-power signal being an LP-WUS.

The first signaling includes at least one of: a system message, radio resource control (RRC) signaling, a medium access control control element (MAC CE), and downlink control information (DCI).

For example, in response to the first communication node being in a connected state, the base station may activate the first communication node to detect the low-power signal by using an RRC release message.

It will be understood that different types of low-power signals may have different third conditions. That is to say, different types of low-power signals may each be independently configured with their own corresponding third condition.

In some embodiments, the monitoring of the low-power signal may be enabled in a non-connected state (e.g., an inactive state or an idle state). That is to say, the first communication node in the inactive or idle state is required to monitor the low-power signal.

In some embodiments, the monitoring of the low-power signal may be enabled in the connected state. That is to say, the first communication node in the connected state is required to monitor the low-power signal. For example, the monitoring of the low-power signal is performed during a DRX on-duration or an activation period of an inactive timer. For example, the monitoring of the low-power signal is performed before the DRX on-duration. The first communication node may also use the measurement results of the low-power signal and the SSB to perform joint measurement, comparison or calibration.

In some embodiments, the first signaling used for activation may carry a configuration of the low-power signal.

For example, for the wake-up of a specific first communication node, the LP-SS or LP-WUS may be configured through signaling in the connected state or RRC signaling; alternatively the LP-SS or LP-WUS may be reconfigured in the signaling in the connected state, RRC signaling, DCI, an MAC CE or an SIB. After receiving the RRC release signaling, the first communication node may monitor the LP-SS or LP-WUS in the inactive or idle state. In response to the first communication node being in the inactive or idle state, the base station may also deactivate the monitoring of the LP-SS or LP-WUS through the LP-WUS or LP-SS.

As an example, in a case where the LP-SS is used for deactivation, the LP-SS may be a group-specific LP-SS or a cell-specific LP-SS.

As an example, in a case where the LP-WUS is used for deactivation, the LP-WUS may be a first-communication-node-specific LP-WUS, a group-specific LP-WUS, or a cell-specific LP-WUS.

### III. Deactivation

In some embodiments, the step S101 may be implemented as: deactivating the monitoring of the low-power signal based on a fourth condition.

The fourth condition includes at least one of the following: a measurement parameter of the low-power signal does not satisfy a fifth threshold requirement, the first communication node does not have low mobility, the first communication node is not in a stationary state, the first communication node is located at a cell edge, and the fourth condition is determined based on second signaling.

In some embodiments, not being at the cell edge may also be referred to as being at a cell center.

The second signaling includes at least one of: RRC signaling, an MAC CE, DCI, a system message, and an indication carried by the low-power signal.

### IV. Filtering

In some embodiments, the step S101 may be implemented as: filtering, based on at least X measurements, a measurement parameter based on the low-power signal of a serving cell. X is a positive integer. A measurement value is a value of the measurement parameter.

As an example, the filtering may be implemented as follows: an averaging operation is performed on measurement values obtained from X measurements, to obtain an average value, and the average value may serve as a value of the measurement parameter. The purpose of filtering is to filter out the jitter in the value of the measurement parameter in the time domain, so that the value of the measurement parameter may be more accurate.

As an example, a time interval between at least two of the X measurements is T/2, and T is a positive integer. T represents a duration or a period, the period may be a discontinuous reception (DRX) period or an LP-SS period.

As an example, the X measurements include at least one of: a measurement based on a first low-power signal, a measurement based on a second low-power signal, a measurement based on an LP-SS, and a measurement based on an LP-WUS.

The first low-power signal is an SSB, a PSS, an SSS, a DMRS, or a CSI-RS; the second low-power signal is an LP-SS or an LP-WUS.

### V. Configuration determination

In some embodiments, the step S101 may be implemented as: determining the configuration of the low-power signal based on a predefined value and/or a base station configuration.

The configuration of the low-power signal includes at least one of: a configuration of an LP-SS, a configuration of an LP-WUS, an activation configuration, a blind detection configuration, a monitoring occasion configuration, a monitoring time-frequency resource configuration, a period of time or a pattern or a period, the number of transmissions of the low-power signal, the number of monitoring times within a period of time or a pattern or a period, the number of transmissions of the low-power signal within a period of time or a pattern or a period, and the maximum number of transmissions of the low-power signal within a period of time or a pattern or a period.

In an example where the maximum number of transmissions of the low-power signal is N, an actual number of transmissions may be less than or equal to N, and N is a positive integer.

A time window is a period of time, and a position of the time window in the time domain may be determined based on the pattern or period. There may be a plurality of monitoring occasions within each time window, and the blind detection is performed in response to the low-power signal being monitored at each monitoring occasion. For example, in FIG. 3, there are N monitoring occasions within the time window 1, and there are also N monitoring occasions within the time window 2. In generally, the low-power signal is transmitted at most once or twice within a time window.

In some embodiments, the LP-SS is an optional configuration. For example, in response to the first communication node being in a stationary state or not located at a cell edge, the LP-SS may be omitted from the configuration.

In some embodiments, in response to the LP-SS being not configured, the RRM measurement may be performed based on a preamble or sequence. In this case, the first communication node expects the base station to transmit at least M preambles within the duration T; alternatively, the first communication node expects the base station to transmit at least one preamble within a period. This period may include a period for relaxed measurement. The first communication node measures the preamble at least N times. Both M and N are positive integers. As an example, M is greater than N.

As an example, the preamble may be a part of the LP-WUS.

As an example, the preamble may be monitored with duty cycle monitoring or always-on monitoring. The duty cycle monitoring refers to monitoring the preamble within monitoring occasions (i.e., a period of time) in a monitoring period. The always-on monitoring refers to monitoring the preamble within each time unit, and the time units are continuous at least within a duration.

In some embodiments, in response to the monitoring of the LP-WUS being activated or the measurement parameter based on the low-power signal satisfying the threshold requirement, the LP-SS is configured.

In some embodiments, the determined configuration further includes a time-frequency position configuration for a physical uplink control channel (PUCCH). The time-frequency position configuration for the PUCCH includes a time domain position of the PUCCH with respect to the LP-WUS, such as 1 slot, 1 ms, 1 time unit, as well as a frequency domain resource configuration, such as N PRBs.

In some embodiments, the determined configuration further includes an association configuration for the LP-SS and the PRACH. For example, different LP-SS time-frequency domain resources correspond to different PRACH resources, including PRACH occasions.

### VI. Monitoring, blind detection, synchronization, reception, and wake-up

In some embodiments, the S101 may be implemented as: performing the operation based on at least one condition, including: monitoring or receiving the low-power signal based on the configuration of the low-power signal.

As an example, the low-power signal is monitored or received at configured monitoring occasions that are continuous in the time domain. That the monitoring occasions are continuous in the time domain may mean that the time units corresponding to the monitoring occasions are continuous in the time domain.

In some embodiments, the time unit may include a slot, a millisecond (ms), a microsecond, an OFDM symbol, an OOK symbol, a subframe, a radio frame, Ts (the minimum time unit of NR), and the like, which is not limited thereto.

In some embodiments, the S101 may be implemented as: performing synchronization based on the configuration of the LP-SS or the configuration of the LP-WUS. The synchronization may include time synchronization and/or frequency synchronization.

In some embodiments, the S101 may be implemented as: performing monitoring, blind detection, or reception based on a blind detection configuration, a monitoring occasion configuration, and a monitoring time-frequency resource configuration. As an example, the S101 may be implemented as: monitoring the low-power signal, performing blind detection on the low-power signal, or receiving the low-power signal.

In some embodiments, the S101 may be implemented as: determining a target operation of the first communication node based on the received LP-WUS, or based on the received LP-WUS and at least one configuration. The target operation includes at least one of: waking up the first communication node, monitoring a paging occasion, receiving a system information block, sending a PRACH, monitoring a PDCCH, receiving a physical downlink shared channel (PDSCH), skipping the PDSCH or PDCCH, activating or deactivating the monitoring of the PDCCH, and activating or deactivating reception of the PDSCH.

The at least one configuration includes at least one of: a PDCCH monitoring configuration and a PDSCH reception configuration, which is not limited thereto.

For example, in response to the received LP-WUS indicating waking up the first communication node, the first communication node is woken up.

For another example, in response to the received LP-WUS indicating receiving the PDSCH, the PDSCH is received based on the PDSCH reception configuration.

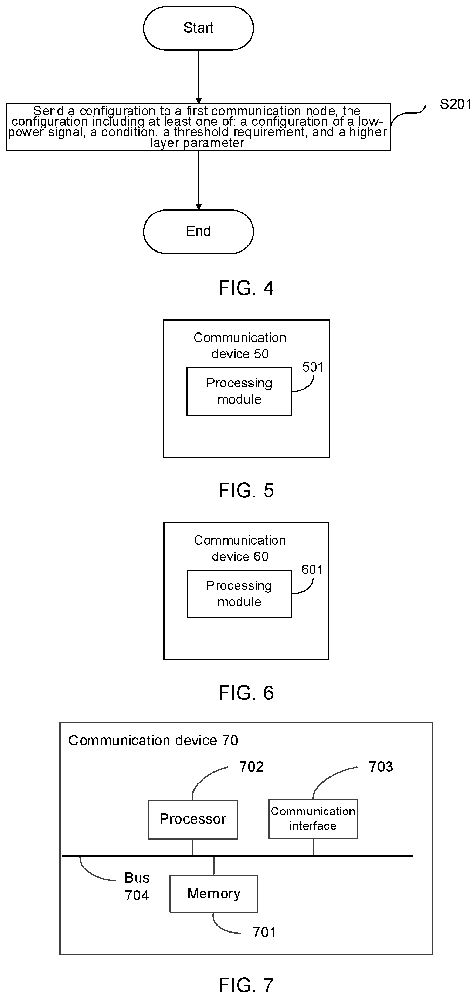

As shown in FIG. 4, a communication method is provided in the embodiments of the present disclosure and applied to the second communication node. The communication method includes the following: in S201, a configuration is sent to the first communication node.

Correspondingly, the first communication node receives the configuration sent by the second communication node.

The configuration includes at least one of: a configuration of a low-power signal, a condition, a threshold requirement, and a higher layer parameter.

For the configuration of the low-power signal, reference may be made to the content described above, and details will not be repeated herein.

In some embodiments, the condition includes at least one of: a first condition for triggering execution of a first type of measurement, a second condition for triggering execution of a second type of measurement or triggering non-execution of the first type of measurement; a third condition for activating the monitoring of the low-power signal, and a fourth condition for deactivating the monitoring of the low-power signal.

For the relevant description of the first condition to the fourth condition, reference may be made to the content described above, and details will not be repeated herein.

It will be understood that the configuration including the condition may mean that the configuration includes a parameter related to the condition and the content of the condition, which is not limited thereto.

In some embodiments, the higher layer parameter includes at least one of a first higher layer parameter, a second higher layer parameter, a third higher layer parameter, and a fourth higher layer parameter. The first higher layer parameter is used to determine whether the first communication node has low mobility; the second higher layer parameter is used to determine whether the first communication node is located at a cell edge; the third higher layer parameter is used to determine whether the first communication node is in a stationary state; and the fourth higher layer parameter is used to determine whether the first communication node in a stationary state is located at a cell edge.

For the relevant description of the first higher layer parameter to the fourth higher layer parameter, reference may be made to the content described above, and details will not be repeated herein.

In some embodiments, the threshold requirement may include the first threshold requirement to the fifth threshold requirement described above. It will be understood that the configuration including the threshold requirement may mean that the configuration includes a parameter (e.g., a threshold, a reference value) related to the threshold requirement and the content of the threshold requirement, which is not limited thereto.

It may be understood that, those skilled in the art will easily realize that the present disclosure may be implemented in the form of hardware or a combination of hardware and computer software, with reference to the algorithm steps of the plurality of examples described in the embodiments disclosed herein. Whether a certain function is performed by hardware or computer software-driven hardware depends on the specific applications and design constraints of the technical solutions. Professional technicians may use different methods to implement the described functions, for each specific application, but such implementation will not be considered beyond the scope of the present disclosure.

As shown in FIG. 5, a communication device 50 is provided in the embodiments of the present disclosure, and the communication device 50 includes a processing module 501.

The processing module 501 is configured to perform an operation based on at least one condition. The operation includes at least one of: measurement, monitoring, blind detection, synchronization, reception, wake-up, activation, deactivation, filtering, and configuration determination.

In some embodiments, the processing module 501 is configured, for example, to perform a first type of measurement based on a first condition. The first condition includes at least one of the following: the first communication node has low mobility, the first communication node is in a stationary state, the first communication node is not located at a cell edge, the first communication node is configured with a higher layer parameter, the first communication node has performed first measurement and/or second measurement at least a preset number of times, the first communication node has performed the first measurement and/or the second measurement within a period of time, and a measurement parameter satisfies a first threshold requirement.

In some embodiments, the higher layer parameter includes at least one of a first higher layer parameter, a second higher layer parameter, a third higher layer parameter, and a fourth higher layer parameter. The first higher layer parameter is used to determine whether the first communication node has low mobility; the second higher layer parameter is used to determine whether the first communication node is located at a cell edge; the third higher layer parameter is used to determine whether the first communication node is in a stationary state; and the fourth higher layer parameter is used to determine whether the first communication node in a stationary state is located at a cell edge.

In some embodiments, the measurement parameter at least includes: a cell selection reception level value, a cell selection quality value, an RSRP, an RSRQ, a reference signal strength indication (RSSI), and a signal to interference plus noise ratio (SINR).

In some embodiments, the measurement parameter is obtained based on a low-power signal.

In some embodiments, the operation is an operation based on the low-power signal. The low-power signal includes at least one of: a low-power synchronization signal (LP-SS), a low-power wake-up signal (LP-WUS), a sequence, a primary synchronization signal (PSS), a secondary synchronization signal (SSS), a demodulation reference signal (DMRS), a synchronization signal block (SSB), and a channel state information-reference signal (CSI-RS).

In some embodiments, the low-power signal is generated based on on-off keying (OOK) modulation, frequency-shift keying (FSK) modulation, or orthogonal frequency division multiplexing (OFDM) modulation.

In some embodiments, a configuration of the LP-SS includes at least one of: the number of beams of the LP-SS, the number of sequences of the LP-SS, the number of bits of information carried by the LP-SS, information of the LP-SS at least including at least one of a system information change notification indication, a disaster warning indication, a wake-up indication, beam information, SSB index information, and cell information, the number of PRBs occupied by the LP-SS, the number of OFDM symbols of the LP-SS, the number of slots in a set of the LP-SS, a period length of the LP-SS, a time domain offset of the LP-SS, and a correspondence between the sequence or sequence set of the LP-SS and the beam information.

In some embodiments, in response to the monitoring of the LP-WUS being activated or the measurement parameter based on the low-power signal satisfying a threshold requirement, the LP-SS is configured.

In some embodiments, the LP-SS is generated based on a sequence or preamble, or the LP-SS is a part of the LP-WUS.

In some embodiments, a configuration of the LP-WUS includes at least one of: a system message change indication, a disaster warning indication, beam information, grouping information, first communication node identification information, a reserved bit, a function indication, cell information, period information, information of a time window or pattern, monitoring occasion information, information of the number of transmissions, and a number of payload bits.

In some embodiments, the beam information includes beam index indication information and/or association information between the beam and other signals or channels.

In some embodiments, the grouping information includes at least one of: index information, identification information, and radio network temporary identifier (RNTI) information of a group where the first communication node is located. The first communication node identification information includes at least one of: index information, identification information, and RNTI information of the first communication node. The cell information includes identification information of a serving cell or identification information of a neighbor cell.

In some embodiments, the function indication is used to determine to perform at least one of the following operations: monitoring of a paging occasion, reception of a system information block, transmission of a physical random access channel (PRACH), and monitoring of a physical downlink control channel (PDCCH).

In some embodiments, the information of the time window or pattern is used to determine a monitoring occasion for monitoring the LP-WUS. The information of the number of transmissions is used to determine the maximum number of transmissions or the number of transmissions for the LP-WUS within a time window, a pattern, a monitoring occasion, or a period.

In some embodiments, the LP-SS and the LP-WUS satisfy at least one of the following: a frequency position of an LP-SS resource does not overlap with a frequency position of an LP-WUS resource; a center frequency position or frequency position of an LP-SS resource is located in the middle of two LP-WUS resources; and a time domain position of an LP-SS resource overlaps or does not overlap with a time domain position of an LP-WUS resource.

In some embodiments, the RSSI may be a linear average power of the received signal over a specific OFDM symbol; alternatively, the RSSI is a linear average power of the received signal over a specific OOK symbol or resource carrying the LP-SS; alternatively, the RSSI is a linear average power of the received signal over an OOK symbol or resource carrying the LP-SS and indicating 1; alternatively, the RSSI is determined based on a first coefficient and a linear average power of the received signal over a measurement time and a frequency domain resource; alternatively, the RSSI is determined based on the first coefficient and a linear average power of the received signal over a specific OOK symbol or resource.

In some embodiments, the first coefficient is determined based on at least one of: the number of OOK symbols or resources carried by an OFDM symbol, a coding rate, a type of an OOK symbol or resource, a bandwidth of a low-power signal, a base station configuration, and a predefined value.

In some embodiments, the RSRP is a linear average power of the received signal over a specific OFDM symbol, OOK symbol, or resource; alternatively, the RSRP is a linear average power of the received signal over an OOK symbol or resource carrying the LP-SS and indicating 1; alternatively, the RSRP is determined based on a linear average power of the received signal over an OOK symbol or resource carrying the LP-SS and indicating 1, and a linear average power of the received signal over an OOK symbol or resource carrying the LP-SS and indicating 0; alternatively, the RSRP is determined based on a second coefficient and a linear average power of the received signal over a specific OFDM symbol, OOK symbol, or resource; alternatively, the RSRP is determined based on a second coefficient and a linear average power of the received signal over an OOK symbol or resource carrying the LP-SS and indicating 1; alternatively, the RSRP is determined based on a second coefficient, a linear average power of the received signal over an OOK symbol or resource carrying the LP-SS and indicating 1, and a linear average power of the received signal over an OOK symbol or resource carrying the LP-SS and indicating 0.

In some embodiments, the second coefficient is determined based on at least one of: the number of OOK symbols or resources carried by an OFDM symbol, a coding rate, a type of an OOK symbol or resource, a bandwidth of a low-power signal, a base station configuration, and a predefined value.

In some embodiments, the RSRQ is determined based on at least one of: a third coefficient, an RSRP based on a specific OOK symbol or resource, an RSRP based on a specific OFDM symbol, an RSSI based on a specific OOK symbol or resource, and an RSSI based on a specific OFDM symbol.

In some embodiments, the processing module 501 is configured, for example, to perform a second type of measurement based on a second condition. The second condition includes at least one of the following: a cell selection criterion S is satisfied and a measurement parameter of a serving cell does not satisfy a second threshold requirement; the first communication node does not have low mobility or is in a moving state; the first communication node is not in a stationary state; the first communication node is located at a cell edge; and a condition based on a low power signal is not satisfied.

In some embodiments, the condition based on the low-power signal includes at least one of the following: a measurement parameter based on a low-power signal satisfies a third threshold requirement; a difference of the measurement parameter based on the low-power signal satisfies a fourth threshold requirement; the measurement parameter satisfies the third threshold requirement for at least N times within a preset or configured time period; and the difference of the measurement parameter satisfies the fourth threshold requirement for at least N times within a preset or configured time period. N is a positive integer.

In some embodiments, the performing the second type of measurement includes any one of: performing first measurement based on a first period; performing the first measurement based on the first period and performing second measurement based on a second period, where the first period is less than the second period; performing the first measurement and the second measurement based on the first period; performing the first measurement and/or the second measurement once at least every M DRX cycles, where M is a positive integer; and performing the first measurement and/or the second measurement at least twice at least every M DRX cycles.

In some embodiments, the processing module 501 is configured, for example, to activate monitoring of a low-power signal based on a third condition. The third condition includes at least one of the following: the third condition is determined based on first signaling, the first condition is satisfied, and a measurement parameter based on an LP-SS satisfies a fifth threshold requirement in response to the monitored low-power signal being an LP-WUS.

In some embodiments, the first signaling includes at least one of: a system message, RRC signaling, an MAC CE, and DCI.

In some embodiments, the processing module 501 is configured, for example, to deactivate monitoring of a low-power signal based on a fourth condition. The fourth condition includes at least one of the following: a measurement parameter of a low-power signal does not satisfy a fifth threshold requirement, the first communication node does not have low mobility, the first communication node is not in a stationary state, the first communication node is located at a cell edge, and the fourth condition is determined based on second signaling.

In some embodiments, the second signaling includes at least one of: RRC signaling, an MAC CE, DCI, a system message, and an indication carried by a low-power signal.

In some embodiments, the processing module 501 is configured, for example, to filter, based on at least X measurements, a measurement parameter based on a low-power signal of a serving cell. X is a positive integer.

In some embodiments, an interval between at least two of the X measurements is T/2. T is a preset period or duration, and T is a positive integer.

In some embodiments, the X measurements include at least one of: a measurement based on a first low-power signal, a measurement based on a second low-power signal, a measurement based on an LP-SS, and a measurement based on an LP-WUS.

In some embodiments, the first low-power signal is an SSB, a PSS, an SSS, a DMRS, or a CSI-RS; the second low-power signal is an LP-SS or LP-WUS.

In some embodiments, the processing module 501 is configured, for example, to determine a configuration of a low-power signal based on a predefined value and/or a base station configuration.

In some embodiments, the processing module 501 is configured, for example, to monitor or receive a low-power signal based on a configuration of a low-power signal.

In some embodiments, the low-power signal is monitored or received at configured monitoring occasions that are continuous in the time domain.

In some embodiments, the processing module 501 is configured, for example, to perform synchronization based on a configuration of an LP-SS or a configuration of an LP-WUS.

In some embodiments, the processing module 501 is configured, for example, to perform monitoring, blind detection, or reception based on a blind detection configuration, a monitoring occasion configuration, and a monitoring time-frequency resource configuration.

In some embodiments, the processing module 501 is configured, for example, to determine a target operation based on the received LP-WUS, or based on the received LP-WUS and at least one configuration.

In some embodiments, the target operation includes at least one of: waking up the first communication node, monitoring a paging occasion, receiving a system information block, sending a PRACH, monitoring a PDCCH, receiving a physical downlink shared channel (PDSCH), skipping the PDSCH or PDCCH, activating or deactivating the monitoring of the PDCCH, and activating or deactivating reception of the PDSCH.

As shown in FIG. 6, a communication device is provided in the embodiments of the present disclosure, and the communication device 60 includes: a communication module 601.

The communication module 601 is configured to send a configuration to the first communication node. The configuration includes at least one of: a configuration of a low-power signal, a condition, a threshold requirement, and a higher layer parameter.

In a case where the functions of the integrated modules are implemented in the form of hardware, another structure of the communication device (which may be the communication device 50 or the communication device 60) involved in the embodiments described above is provided in the embodiments of the present disclosure. As shown in FIG. 7, the communication device 70 includes a processor 702 and a bus 704. In some embodiments, the communication device may further include a memory 701. In some embodiments, the communication device 70 may further include a communication interface 703.

The processor 702 may implement or execute a variety of exemplary logical blocks, modules and circuits described with reference to the embodiments of the present disclosure. The processor 702 may be a central processing unit, a general-purpose processor, a digital signal processor, an application specific integrated circuit, a field programmable gate array or any other programmable logic device, a transistor logic device, a hardware component, or any combination thereof. The processor 702 may implement or execute a variety of exemplary logical blocks, modules and circuits described with reference to the embodiments of the present disclosure. The processor 702 may also be a combination that implements computing functions, for example, a combination of one or more microprocessors, or a combination of a digital signal processor (DSP) and a microprocessor.

The communication interface 703 is configured to connect to other devices through a communication network. The communication network may be an Ethernet, a radio access network, a wireless local area network (WLAN), or the like.

The memory 701 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure. In an implementation, the memory 701 may exist independently of the processor 702, and the memory 701 may be connected to the processor 702 through the bus 704 and used for storing instructions or program codes. When calling and executing the instructions or program codes stored in the memory 701, the processor 702 may perform the communication method provided in the embodiments of the present disclosure. In another implementation, the memory 701 may also be integrated with the processor 702.

The bus 704 may be an extended industry standard architecture (EISA) bus, or the like. The bus 704 may be classified as an address bus, a data bus, and a control bus. For ease of representation, only one bold line is used in FIG. 7, but it does not mean that there is only one bus or one type of bus.

A computer readable storage medium (e.g., a non-transitory computer readable storage medium) is provided in some embodiments of the present disclosure. The computer readable storage medium has stored computer program instructions. Upon the computer program instructions are run on a computer, the computer is enabled to perform the communication method as described in any one of the embodiments described above.

For example, the computer readable storage medium may include, but is not limited to: a magnetic storage device (e.g., a hard disk, a floppy disk, or a magnetic tape), an optical disk (e.g., a compact disk (CD)), a digital versatile disk (DVD), a smart card and a flash memory device (e.g., an erasable programmable read-only memory (EPROM), a card, a stick or a key driver). The computer readable storage media described in the present disclosure may represent one or more devices and/or other machine-readable storage media for storing information. The term "machine-readable storage medium" may include, but is not limited to, wireless channels and a variety of other media capable of storing, containing, and/or carrying instructions and/or data.

A computer program product including instructions is provided in the embodiments of the present disclosure. Upon the computer program product is run on a computer, the computer is enabled to perform the communication method as described in any one of the embodiments described above.

In the embodiments of the present disclosure, the purpose of improving the relevant mechanism of low-power signals is achieved by performing the corresponding operation in at least one condition.

Although the present disclosure has been described with reference to specific features and embodiments thereof, it will be apparent that a variety of modifications and combinations may be made thereto without departing from the spirit and scope of the present disclosure. Correspondingly, the specification and drawings are merely exemplary examples of the present disclosure as defined by the appended claims and are deemed to cover any and all modifications, variations, combinations or equivalents within the scope of the present disclosure. Obviously, those skilled in the art may make a variety of changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above are merely specific implementations of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A communication method, applied to a first communication node, comprising:
performing an operation based on at least one condition; wherein the operation includes at least one of: measurement, monitoring, blind detection, synchronization, reception, wake-up, activation, deactivation, filtering, and configuration determination.

2. The method according to claim 1, wherein the performing the operation based on the at least one condition, comprises:
performing a first type of measurement based on a first condition; wherein the first condition includes at least one of the following:
the first communication node has low mobility;
the first communication node is in a stationary state;
the first communication node is not located at a cell edge;
the first communication node is configured with a higher layer parameter;
the first communication node has performed first measurement and/or second measurement at least a preset number of times;
the first communication node has performed the first measurement and/or the second measurement within a period of time; and
a measurement parameter satisfies a first threshold requirement.

3. The method according to claim 2, wherein the higher layer parameter includes at least one of a first higher layer parameter, a second higher layer parameter, a third higher layer parameter, and a fourth higher layer parameter; wherein the first higher layer parameter is used to determine whether the first communication node has low mobility; the second higher layer parameter is used to determine whether the first communication node is located at the cell edge; the third higher layer parameter is used to determine whether the first communication node is in the stationary state; and the fourth higher layer parameter is used to determine whether the first communication node in the stationary state is located at the cell edge.

4. The method according to claim 2, wherein the measurement parameter at least includes: a cell selection reception level value, a cell selection quality value, a reference signal receiving power (RSRP), a reference signal receiving quality (RSRQ), a reference signal strength indication (RSSI), and a signal to interference plus noise ratio (SINR).

5. The method according to claim 4, wherein the measurement parameter is obtained based on a low-power signal.

6. The method according to claim 1 or 5, wherein the operation is an operation based on a low-power signal, and the low-power signal includes at least one of: a low-power synchronization signal (LP-SS), a low-power wake-up signal (LP-WUS), a sequence, a primary synchronization signal (PSS), a secondary synchronization signal (SSS), a demodulation reference signal (DMRS), a synchronization signal block (SSB), and a channel state information-reference signal (CSI-RS).

7. The method according to claim 5, wherein the low-power signal is generated based on on-off keying (OOK) modulation, frequency-shift keying (FSK) modulation, or orthogonal frequency division multiplexing (OFDM) modulation.

8. The method according to claim 6, wherein a configuration of the LP-SS includes at least one of the following:
a number of beams of the LP-SS is 1, 4 or 8;
a number of sequences of the LP-SS is 2, 4, 8, or 16;
a number of bits of information carried by the LP-SS is 1, 2, 3, or 4;
information of the LP-SS at least includes at least one of a system information change notification indication, a disaster warning indication, a wake-up indication, beam information, and SSB index information;
for a subcarrier spacing of 30 kHz, a number of PRBs occupied by the LP-SS is 6, 7, 8, 10, 11, 12, or 13; for a subcarrier spacing of 15 kHz, a number of PRBs occupied by the LP-SS is 23, 24, 25, 26, 27, or 28;
a number of OFDM symbols of the LP-SS is 1, 4, 7 or 14;
a number of slots in a set of the LP-SS is 1, 2 or 4;
a period length of the LP-SS is 160 ms, 320 ms, 640 ms, 1280 ms, or 2560 ms;
a time domain offset of the LP-SS is 0 ms, 5 ms, 10 ms, 20 ms, 40 ms, or 80 ms; and
a correspondence between a sequence or sequence set of the LP-SS and the beam information.

9. The method according to claim 6, wherein the LP-SS is configured in response to monitoring of the LP-WUS being activated or a measurement parameter based on the low-power signal satisfying a threshold requirement.

10. The method according to claim 6, wherein the LP-SS is generated based on a sequence or preamble, or the LP-SS is a part of the LP-WUS.

11. The method according to claim 6, wherein a configuration of the LP-WUS includes at least one of:
a system message change indication;
a disaster warning indication;
beam information;
grouping information of the first communication node;
first communication node identification information;
a reserved bit;
a function indication;
cell information;
period information;
information of a time window or pattern;
monitoring occasion information;
information of a number of transmissions; and
a number of payload bits.

12. The method according to claim 11, wherein the beam information includes beam index indication information and/or association information between a beam and other signals or channels.

13. The method according to claim 11, wherein the grouping information of the first communication node includes at least one of: index information, identification information, and radio network temporary identifier (RNTI) information of a group where the first communication node is located;
the first communication node identification information includes at least one of: index information, identification information, and RNTI information of the first communication node; and
the cell information includes identification information of a serving cell or identification information of a neighbor cell.

14. The method according to claim 11, wherein the function indication is used to determine to perform at least one of the following operations: monitoring of a paging occasion, reception of a system information block, transmission of a physical random access channel (PRACH), and monitoring of a physical downlink control channel (PDCCH).

15. The method according to claim 11, wherein the information of the time window or pattern is used to determine a monitoring occasion for monitoring the LP-WUS; and
the information of the number of transmissions is used to determine a maximum number of transmissions or a number of transmissions for the LP-WUS within the time window, the pattern, the monitoring occasion, or a period.

16. The method according to claim 6, wherein the LP-SS and the LP-WUS satisfy at least one of the following:
a frequency position of an LP-SS resource does not overlap with a frequency position of an LP-WUS resource;
a center frequency position of the LP-SS resource or the frequency position of the LP-SS resource is located in a middle of two LP-WUS resources; and
a time domain position of the LP-SS resource overlaps or does not overlap with a time domain position of the LP-WUS resource.

17. The method according to claim 4, wherein
the RSSI is a linear average power of a received signal over a specific OFDM symbol; or
the RSSI is a linear average power of a received signal over a specific OOK symbol or resource carrying an LP-SS; or
the RSSI is a linear average power of a received signal over an OOK symbol or resource carrying the LP-SS and indicating 1; or
the RSSI is determined based on a first coefficient and a linear average power of a received signal over a measurement time and a frequency domain resource; or
the RSSI is determined based on the first coefficient and a linear average power of a received signal over a specific OOK symbol or resource.

18. The method according to claim 17, wherein the first coefficient is determined based on at least one of: a number of OOK symbols or resources carried by an OFDM symbol, a coding rate, a type of an OOK symbol or resource, a bandwidth of a low-power signal, a base station configuration, and a predefined value.

19. The method according to claim 4, wherein
the RSRP is a linear average power of a received signal over a specific OFDM symbol, OOK symbol, or resource; or
the RSRP is a linear average power of a received signal over an OOK symbol or resource carrying an LP-SS and indicating 1; or
the RSRP is determined based on the linear average power of the received signal over the OOK symbol or resource carrying the LP-SS and indicating 1, and a linear average power of a received signal over an OOK symbol or resource carrying the LP-SS and indicating 0; or
the RSRP is determined based on a second coefficient and the linear average power of the received signal over the specific OFDM symbol, OOK symbol, or resource; or
the RSRP is determined based on the second coefficient and the linear average power of the received signal over the OOK symbol or resource carrying the LP-SS and indicating 1; or
the RSRP is determined based on the second coefficient, the linear average power of the received signal over the OOK symbol or resource carrying the LP-SS and indicating 1, and the linear average power of the received signal over the OOK symbol or resource carrying the LP-SS and indicating 0.

20. The method according to claim 19, wherein the second coefficient is determined based on at least one of: a number of OOK symbols or resources carried by an OFDM symbol, a coding rate, a type of an OOK symbol or resource, a bandwidth of a low-power signal, a base station configuration, and a predefined value.

21. The method according to claim 4, wherein the RSRQ is determined based on at least one of:
a third coefficient;
an RSRP based on a specific OOK symbol or resource;
an RSRP based on a specific OFDM symbol;
an RSSI based on the specific OOK symbol or resource; and
an RSSI based on the specific OFDM symbol.

22. The method according to claim 1, wherein the performing the operation based on the at least one condition, comprises:
performing a second type of measurement based on a second condition, or not performing a first type of measurement based on the second condition;
wherein the second condition includes at least one of the following:
a cell selection criterion S is satisfied, and a measurement parameter of a serving cell does not satisfy a second threshold requirement;
the first communication node does not have low mobility or is in a moving state;
the first communication node is not in a stationary state;
the first communication node is located at a cell edge or does not satisfy a condition of not being at the cell edge; and
a condition based on a low power signal is not satisfied.

23. The method according to claim 22, wherein the condition based on the low-power signal includes at least one of the following:
a measurement parameter based on the low-power signal satisfies a third threshold requirement;
a difference of the measurement parameter based on the low-power signal satisfies a fourth threshold requirement;
the measurement parameter satisfies the third threshold requirement for at least N times within a preset or configured time period; and
the difference of the measurement parameter satisfies the fourth threshold requirement for at least N times within the preset or configured time period, N is a positive integer.

24. The method according to claim 22, wherein the performing the second type of measurement comprises any one of:
performing first measurement based on a first period;
performing the first measurement based on the first period and performing second measurement based on a second period, the first period being less than or equal to the second period;
performing the first measurement and the second measurement based on the first period;
performing the first measurement and/or the second measurement once at least every M discontinuous reception (DRX) cycles, M being a positive integer; and
performing the first measurement and/or the second measurement at least twice at least every M DRX cycles.

25. The method according to claim 1, wherein the performing the operation based on the at least one condition, comprises:
activating monitoring of a low-power signal based on a third condition;
wherein the third condition includes at least one of the following:
the third condition is determined based on first signaling;
a first condition is satisfied; and
in response to the monitored low-power signal being an LP-WUS, a measurement parameter based on an LP-SS satisfies a fifth threshold requirement.

26. The method according to claim 25, wherein the first signaling includes at least one of: a system message, radio resource control (RRC) signaling, a medium access control control element (MAC CE), and downlink control information (DCI).

27. The method according to claim 1, wherein the performing the operation based on the at least one condition, comprises:
deactivating monitoring of a low-power signal based on a fourth condition;
wherein the fourth condition includes at least one of the following:
a measurement parameter of the low-power signal does not satisfy a fifth threshold requirement;
the first communication node does not have low mobility;
the first communication node is not in a stationary state;
the first communication node is located at a cell edge; and
the fourth condition is determined based on second signaling.

28. The method according to claim 27, wherein the second signaling includes at least one of: RRC signaling, an MAC CE, DCI, a system message, and an indication carried by the low-power signal.

29. The method according to claim 1, wherein the performing the operation based on the at least one condition, comprises:
filtering, based on at least X measurements, a measurement parameter based on a low-power signal of a serving cell, X being a positive integer.

30. The method according to claim 29, wherein an interval between at least two of the X measurements is T/2, T is a preset period or duration, and T is a positive integer.

31. The method according to claim 29, wherein the X measurements include at least one of:
a measurement based on a first low-power signal;
a measurement based on a second low-power signal;
a measurement based on an LP-SS; and
a measurement based on an LP-WUS.

32. The method according to claim 31, wherein the first low-power signal is an SSB, a PSS, an SSS, a DMRS, or a CSI-RS; the second low-power signal is the LP-SS or the LP-WUS.

33. The method according to claim 1, wherein the performing the operation based on the at least one condition, comprises:
determining a configuration of a low-power signal based on a predefined value and/or a base station configuration.

34. The method according to claim 1, wherein the performing the operation based on the at least one condition, comprises:
monitoring or receiving a low-power signal based on a configuration of the low-power signal.

35. The method according to claim 34, wherein the low-power signal is monitored or received at configured monitoring occasions that are continuous in a time domain.

36. The method according to claim 1, wherein the performing the operation based on the at least one condition, comprises:
performing synchronization based on a configuration of an LP-SS or a configuration of an LP-WUS.

37. The method according to claim 1, wherein the performing the operation based on the at least one condition, comprises:
performing monitoring, blind detection, or reception based on a blind detection configuration, a monitoring occasion configuration, and a monitoring time-frequency resource configuration.

38. The method according to claim 1, wherein the performing the operation based on the at least one condition, comprises:
determining a target operation based on a received LP-WUS, or based on the received LP-WUS and at least one configuration.

39. The method according to claim 38, wherein the target operation includes at least one of:
waking up the first communication node;
monitoring a paging occasion;
receiving a system information block;
sending a PRACH;
monitoring a PDCCH;
receiving a physical downlink shared channel (PDSCH);
skipping the PDSCH or the PDCCH;
activating or deactivating monitoring of the PDCCH; and
activating or deactivating reception of the PDSCH.

40. A communication method, applied to a second communication node, comprising:
sending a configuration to a first communication node; wherein the configuration includes at least one of: a configuration of a low-power signal, a condition, a threshold requirement, and a higher layer parameter.

41. The method according to claim 40, wherein the condition includes at least one of:
a first condition for triggering execution of a first type of measurement;
a second condition for triggering execution of a second type of measurement or triggering non-execution of the first type of measurement;
a third condition for activating monitoring of the low-power signal; and
a fourth condition for deactivating the monitoring of the low-power signal.

42. The method according to claim 40, wherein the higher layer parameter includes at least one of a first higher layer parameter, a second higher layer parameter, a third higher layer parameter, and a fourth higher layer parameter; wherein the first higher layer parameter is used to determine whether the first communication node has low mobility; the second higher layer parameter is used to determine whether the first communication node is located at a cell edge; the third higher layer parameter is used to determine whether the first communication node is in a stationary state; and the fourth higher layer parameter is used to determine whether the first communication node in the stationary state is located at the cell edge.

43. The method according to claim 40, wherein the configuration of the low-power signal includes at least one of:
a configuration of an LP-SS;
a configuration of an LP-WUS;
an activation configuration;
a blind detection configuration;
a monitoring occasion configuration;
a monitoring time-frequency resource configuration;
a period of time or a pattern or a period;
a number of transmissions of the low-power signal;
a number of monitoring times within the period of time or the pattern or the period;
a number of transmissions of the low-power signal within the period of time or the pattern or the period; and
a maximum number of transmissions of the low-power signal within the period of time or the pattern or the period.

44. A communication device, comprising a memory and a processor, wherein the memory is coupled to the processor; the memory is configured to store instructions executable by the processor; upon executing the instructions, the processor performs the method according to any one of claims 1 to 43.

45. A computer readable storage medium, wherein the computer readable storage medium has stored computer instructions that, upon run on a communication device, enable the communication device to perform the method according to any one of claims 1 to 43.
